# FASCICULE DE BREVET EUROPEEN

(11) **EP 3 918 904 B1**
(45) Date de publication et mention de la délivrance du brevet: **19.04.2023**
(21) Numéro de dépôt: 21305649.2
(22) Date de dépôt: 18.05.2021
(51) Int. Cl.: A01D 46/28

(54) **PROCÉDÉ AUTOMATISÉ DE SÉLECTION ET DE RÉCOLTE DE FRUITS ET ÉQUIPEMENT MÉCANIQUE METTANT EN OEUVRE LE PROCÉDÉ**
AUTOMATISIERTES VERFAHREN ZUR AUSWAHL UND ERNTE VON FRÜCHTEN UND MECHANISCHE AUSRÜSTUNG ZUR DURCHFÜHRUNG DES VERFAHRENS
AUTOMATED METHOD FOR SELECTING AND HARVESTING FRUIT AND MECHANICAL EQUIPMENT IMPLEMENTING THE METHOD

(30) Priorité: 02.06.2020 FR 2005777
(43) Date de publication de la demande: 08.12.2021
(73) Titulaire: Exel Industries, 51200 Epernay (FR)
(72) Inventeur: BALLU, Patrick, 75009 PARIS (FR); CHABALLIER, Colin, 75009 PARIS (FR)
(74) Mandataire: Argyma

(56) Documents cités:
- WO-A2-2019/138212
- CN-A- 110 832 991
- JP-A- H08 103 139
- US-A1- 2006 101 797
- US-A1- 2016 050 852

## Description

### DOMAINE TECHNIQUE

L'invention se situe dans le domaine de l'automatisation agricole et, plus précisément, dans le domaine de l'identification automatique des fruits à récolter. Elle concerne un procédé de récolte de fruits portés par une tige, en particulier des fruits sous forme de grappe, tels que les grappes de raisin, et un équipement mécanique pour la récolte de fruits.

### ÉTAT DE LA TECHNIQUE ANTÉRIEURE

La récolte des fruits, couramment appelée « vendange » pour le raisin, peut être effectuée par méthode mécanique ou manuelle. La méthode mécanique peut être effectuée par secouage ou battage des plants de vigne, de façon à séparer les grains de la rafle et à les faire tomber sur un tapis de collecte. Une telle méthode peut être parfaitement adaptée pour certains cépages dont la rafle des grappes n'a pas besoin d'être conservée, et dont les grains de raisin ne craignent pas les conséquences de l'oxydation ni de la coloration du jus par la peau. L'altération des baies provoque en effet une oxydation du jus et une dissolution par celui-ci des substances colorantes contenues dans la peau. Pour les raisons ci-dessus, la vendange par méthode manuelle est effectuée par une coupe des grappes entières, au niveau de leur pédoncule, afin d'éviter l'ouverture des grains et de conserver la rafle et ses qualités lors du pressurage. Elle requière une main-d'oeuvre importante pendant une période relativement courte, de l'ordre de 10 à 15 jours habituellement, durant laquelle le raisin présente une maturité adéquate.

Une difficulté supplémentaire résulte de ce que la vigne présente au moment des vendanges différents degrés de maturité, entre les différentes ceps de vigne mais aussi sur un même cep. Pour répondre à cette problématique, il a été proposé d'intégrer aux machines de récolte de fruits des moyens pour déterminer le degré de maturité des fruits et des moyens pour récolter et trier de façon individualisée les fruits ayant atteint un degré de maturité adéquat.

La demande FR 2 760 595 A1 décrit un procédé de récolte de grappes de raisin comprenant une étape préalable de pose manuelle de moyens de repérage sur les pédoncules des grappes de raisin ayant atteint un degré de maturité satisfaisant, une étape de détection des moyens de repérage et de guidage d'un outillage de coupe vers chaque moyen de repérage, et une étape de coupe des pédoncules au niveau de chaque moyen de repérage. Cette solution permet de ne récolter que le raisin mûr en conservant l'intégrité des baies et la grappe entière. Toutefois, elle nécessite encore une importante quantité de main-d'oeuvre qualifiée pour réaliser la pose des moyens de repérage.

Les documents CN 110832991 A et US 2006101797 A1 décrivent des robots récolteurs utilisant des caméras et des procédés d'analyse d'image. Toutefois, ces documents ne permettent pas de discriminer efficacement entre les tiges ou pédoncules et d'autres objets longiformes.

Compte tenu de ce qui précède, l'invention a pour objectif de fournir un procédé de récolte de fruits entièrement automatisé qui permette de conserver l'intégrité des baies et de la grappe. En particulier, le procédé de récolte doit permettre d'identifier et de localiser les fruits à récolter, de préférence en fonction de leur degré de maturité. L'invention a encore pour objectif de fournir un procédé dont les coûts de mise en oeuvre et d'exploitation sont compatibles avec une utilisation dans une exploitation agricole.

### EXPOSÉ DE L'INVENTION

À cet effet, l'invention propose un procédé de récolte de fruits comprenant une identification et une localisation automatisée des tiges, ou pédoncules, des fruits, et une coupe individuelle et automatisée des fruits au niveau de ces tiges ou pédoncules. L'identification et la localisation des tiges sont effectuées en deux phases : dans une première phase, une image dite globale, représentant une partie relativement importante d'un arbre, d'un arbuste ou d'un plant est acquise, et un ou plusieurs fruits sont détectés dans cette image globale ; dans une deuxième phase, des images dites
locales sont acquises pour chaque fruit détecté, et les tiges ou pédoncules de ces fruits sont identifiés et localisés en vue de leur coupe individuelle.

Plus précisément, l'invention a pour objet un procédé de récolte de fruits portés par une tige ou un pédoncule, tel que décrit à la revendication 1. Notamment, le procédé selon l'invention comprend comprenant :
- une étape de détection de zones d'intérêt dans une image globale représentant un ensemble végétal, dans laquelle une ou plusieurs zones d'intérêt sont détectées dans l'image globale à l'aide d'un processus de traitement d'image, chaque zone d'intérêt comportant au moins une partie d'un fruit,
- une étape d'acquisition d'images locales, dans laquelle une image locale est acquise au voisinage de chaque zone d'intérêt, chaque image locale représentant au moins une partie du fruit de la zone d'intérêt considérée, et
- une étape d'identification des tiges ou des pédoncules, dans laquelle une tige ou un pédoncule est identifié dans chaque image locale.

L'ensemble végétal est supposé porter un ensemble de fruits, par exemple des fruits en grappe. Il est par exemple formé par un arbre ou un arbuste fruitier, un plant grimpant (par exemple de concombre ou tomate), ou encore un cep de vigne. Dans ce dernier cas, les fruits à récolter sont des grappes de raisin. L'image globale représente tout ou partie de cet ensemble végétal. À titre d'exemple, l'image globale peut imager une surface d'environ 1 m² (mètre carré).

L'image globale peut être une image bidimensionnelle ou tridimensionnelle. Une image bidimensionnelle est généralement formée à l'aide d'une caméra comprenant un capteur formé d'un ensemble d'éléments photosensibles (ou pixels) organisés en matrice. Chaque pixel peut être associé à des intensités de rayonnement dans plusieurs bandes de longueurs d'onde du spectre visible, ultraviolet et/ou infrarouge. Le spectre visible est défini comme le spectre électromagnétique de longueur d'onde comprise entre 390 nm (nanomètres) et 780 nm ; le spectre ultraviolet 30 est défini comme le spectre électromagnétique de longueur d'onde comprise entre 10 nm et 390 nm ; et le spectre infrarouge est défini comme le spectre électromagnétique de longueur d'onde comprise entre 780 nm et 0,1 mm (millimètre). Chaque pixel peut notamment être associé à une intensité de rayonnement dans une bande de longueurs d'onde du spectre proche infrarouge, compris entre 780 nm et 3 µm (micromètres). L'image globale est par exemple une image multispectrale, c'est-à-dire capturant des données dans une pluralité de bandes de longueurs d'onde généralement disjointes, ou une image hyperspectrale, c'est-à-dire capturant des données dans une pluralité de bandes de longueurs couvrant une large plage de longueurs d'onde.

Une image tridimensionnelle comprend un nuage de points définis chacun par une position dans l'espace. Chaque point de l'image tridimensionnelle peut en outre être associé à des intensités de rayonnement dans plusieurs bandes de longueurs d'onde du spectre visible, ultraviolet et/ou infrarouge.

Le traitement d'image utilisé pour la détection des zones d'intérêt dans l'image globale peut comprendre une méthode de classification, supervisée ou non, basée sur la forme et les couleurs.

Les images locales sont acquises dans l'objectif de permettre l'identification et la localisation des tiges ou des pédoncules des fruits. Elles sont ainsi acquises avec un champ de vision plus restreint, pointant sur un seul fruit, à savoir le fruit de la zone d'intérêt détectée. Toujours à titre d'exemple, chaque image locale peut imager une surface de l'ordre de 300 cm². Dans la mesure où, par gravité, la tige des fruits se trouve normalement positionnée au-dessus de la partie principale du fruit, les images locales sont de préférence acquises avec un champ de vision pointant vers le bas, c'est-à-dire sous la ligne d'horizon, de façon à permettre la visualisation de la tige dans l'image locale.

Chaque image locale peut être une image locale bidimensionnelle ou tridimensionnelle. Chaque image locale bidimensionnelle comprend un ensemble de pixels définis chacun par des intensités de rayonnement dans plusieurs bandes de longueurs d'onde du spectre visible et/ou infrarouge. Chaque image locale tridimensionnelle comprend un nuage de points définis chacun par une position dans l'espace et par des intensités de rayonnement dans plusieurs bandes de longueurs d'onde du spectre visible et/ou infrarouge.

L'étape d'identification des tiges ou des pédoncules peut comprendre une sous-étape de détection d'objets longiformes, dans laquelle les éléments présentant une forme allongée sont détectés dans chaque image locale, et une sous-étape de discrimination, dans laquelle il est déterminé si chaque objet longiforme est une tige ou un pédoncule, ou bien un objet longiforme d'un autre type. Un élément peut être défini comme présentant une forme allongée lorsque le rapport de sa plus grande dimension sur sa dimension orthogonale ou sur chacune des deux autres dimensions orthogonales est supérieur ou égal à trois.

La sous-étape de discrimination peut être réalisée à l'aide de différents critères. Ces critères peuvent porter sur le spectre électromagnétique réfléchi par les objets longiformes, les dimensions de ces objets longiformes, leur forme et leur orientation. Ils peuvent être utilisés seuls ou en combinaison.

Selon une première variante de réalisation, la sous-étape de discrimination comprend une classification de chaque objet longiforme en fonction des intensités de rayonnement de ses pixels ou de ses points. En particulier, au cours de ladite sous-étape de classification, il peut être déterminé si le spectre de chaque objet longiforme est au moins en partie situé dans une bande de longueurs d'onde correspondant au vert ou au marron. Dans le cas d'une grappe de raisin, la couleur verte correspond normalement à un pédoncule et la couleur marron à un sarment. Au cours de la sous-étape de classification des objets longiformes, il peut également être déterminé si le spectre de chaque objet longiforme est au moins en partie situé dans une bande de longueurs d'onde du proche infrarouge révélatrice de la présence ou de l'absence de chlorophylle, par exemple la bande de longueurs d'onde comprise entre 680 nm et 850 nm.

Selon une deuxième variante de réalisation, la sous-étape de discrimination comprend une détermination d'une longueur de chaque objet longiforme. Un objet longiforme peut alors être considéré comme une tige ou un pédoncule si sa longueur est comprise dans une plage de longueurs prédéterminée. Pour une grappe de raisin, ladite plage est par exemple comprise entre 0,5 cm (centimètre) et 3 cm. Une longueur supérieure à 3 cm correspond typiquement à un fil de palissage.

Selon une troisième variante de réalisation, la sous-étape de discrimination comprend une détermination d'une position relative de chaque objet longiforme par rapport à un corps du fruit. Un objet longiforme peut ainsi être considéré comme une tige ou un pédoncule s'il est positionné au-dessus du corps du fruit.

Selon une quatrième variante de réalisation, la sous-étape de discrimination comprend une détermination d'une courbure de chaque objet longiforme. La probabilité qu'une tige ou un pédoncule s'étende verticalement vers le bas étant relativement faible, la grappe entraîne généralement, sous l'effet de son poids, une courbure de la tige ou du pédoncule. Un objet longiforme peut ainsi être considéré comme une tige ou un pédoncule lorsqu'il présente une courbure supérieure à un seuil de courbure prédéterminé.

Selon une cinquième variante de réalisation, la sous-étape de discrimination comprend une détermination d'un ou plusieurs angles formés entre un axe longitudinal de chaque objet longiforme et un axe prédéterminé d'un fil de palissage. Les végétaux peuvent être alignés de façon à former une pluralité de rangées alignées parallèlement entre elles. Dans chaque rangée, un ou plusieurs fils de palissage peuvent être installés afin de servir de support aux végétaux. Chaque fil de palissage forme alors un objet longiforme susceptible d'être identifié comme une tige ou un pédoncule de fruit. Dans le but d'exclure ces fils de palissage des objets longiformes détectés, chaque objet longiforme dont l'axe longitudinal forme au moins un angle inférieur à un angle prédéterminé peut être considéré comme un fil de palissage. A contrario, un objet longiforme peut être considéré comme une tige ou un pédoncule lorsque chaque angle ou au moins l'un des angles formés entre son axe longitudinal et un axe prédéterminé de fil de palissage est supérieur à un angle prédéterminé, par exemple égal à 10 degrés.

L'étape d'acquisition d'images locales peut comprendre une sous-étape de positionnement d'une caméra à proximité de chaque zone d'intérêt détectée dans l'image globale, la caméra étant agencée pour acquérir les images locales. De préférence, la caméra est positionnée au-dessus de chaque fruit, de manière à permettre la visualisation de la tige ou du pédoncule portant ce fruit.

Selon une forme particulière de réalisation, le procédé comporte, en outre, une étape de détermination d'un degré de maturité des fruits, dans laquelle un indicateur du degré de maturité est déterminé pour le fruit de chaque zone d'intérêt détectée. L'indicateur du degré de maturité d'un fruit peut notamment être déterminé en fonction de son rayonnement dans une ou plusieurs plages de longueurs d'onde prédéterminées. Ces plages de longueurs d'onde peuvent être révélatrices d'un taux de sucre et/ou d'un taux d'anthocyane.

Toujours selon une forme particulière de réalisation, compatible avec la précédente, le procédé comporte, en outre, une étape de détermination d'un état sanitaire des fruits, dans laquelle un indicateur de l'état sanitaire est déterminé pour le fruit de chaque zone d'intérêt détectée. L'indicateur de l'état sanitaire peut notamment être représentatif de la présence d'un bioagresseur dans ou sur le fruit. Le bioagresseur est par exemple un agent phytopathogène (bactérie, virus, mycète, etc.) ou un organisme nuisible (mollusque, arachnide, insecte ravageur, etc.). L'indicateur de l'état sanitaire peut être déterminé en fonction de son rayonnement dans une ou plusieurs plages de longueurs d'onde prédéterminées. Ces plages de longueurs d'onde peuvent être révélatrices de la présence d'un bioagresseur, par exemple d'oïdium et/ou de mildiou et/ou de botrytis. L'indicateur de l'état sanitaire peut en outre être déterminé par reconnaissance de forme. En particulier, pour une grappe de raisin, l'indicateur de l'état sanitaire peut être déterminé par une reconnaissance de la forme des baies de la grappe de raisin.

L'indicateur du degré de maturité et/ou l'indicateur de l'état sanitaire peuvent être déterminés pour chaque fruit à partir de l'image globale et/ou d'une image locale.

Le procédé peut également comprendre une étape de sélection des fruits à récolter, dans laquelle les fruits à récolter sont sélectionnés en fonction de l'indicateur du degré de maturité et/ou de l'indicateur de l'état sanitaire.

Le procédé peut aussi comporter une étape de détermination de la présence d'obstacles, dans laquelle il est déterminé si des obstacles entravent la récolte des fruits. L'étape de détermination de la présence d'obstacles peut être déterminée pour chaque fruit à partir de l'image globale ou, de préférence, à partir de l'image locale correspondante. Au cours de l'étape de sélection à fruits à récolter, les fruits à récolter peuvent alors également être sélectionnés en fonction de la présence ou de l'absence d'obstacles.

Avantageusement, le procédé comprend, en outre, une étape de récolte des fruits, dans laquelle la tige ou le pédoncule identifié dans chaque image locale est coupé. De préférence, chaque tige ou pédoncule est coupé immédiatement après son identification. Lorsque le procédé comprend une étape de sélection des fruits à récolter, seuls les fruits sélectionnés sont récoltés au cours de l'étape de récolte des fruits.

Le procédé peut également comprendre une étape d'établissement d'une cartographie des fruits restant à récolter, dans laquelle des coordonnées géographiques sont déterminées pour chaque zone d'intérêt détectée pour laquelle le fruit n'a pas été récolté. Tel est par exemple le cas lorsque la tige ou le pédoncule du fruit n'a pas pu être identifié, lorsque l'indicateur du degré de maturité du fruit n'est pas convenable ou lorsqu'un obstacle empêche la récolte. La cartographie des fruits restant à récolter permet de connaître la quantité et la position des fruits nécessitant une récolte manuelle, et donc de planifier les travaux manuels nécessaires.

Le procédé peut aussi comprendre une étape d'établissement d'une cartographie des fruits, dans laquelle des coordonnées géographiques sont déterminées pour chaque zone d'intérêt détectée. Cette cartographie permet de déterminer la répartition et la densité des fruits sur une parcelle.

L'invention a également pour objet un équipement mécanique pour la récolte de fruits agencée pour mettre en oeuvre le procédé décrit précédemment. En particulier, l'équipement mécanique peut comprendre un système de sélection des fruits à récolter comportant :
▪ une caméra principale, agencée pour acquérir des images globales représentant chacune un ensemble végétal,
▪ une unité de détection de zones d'intérêt, agencée pour détecter une ou plusieurs zones d'intérêt dans chaque image globale, chaque zone d'intérêt comportant au moins une partie d'un fruit,
▪ une ou plusieurs caméras secondaires, agencées pour acquérir une image locale au voisinage de chaque zone d'intérêt, chaque image locale représentant au moins une partie du fruit de la zone d'intérêt considérée, et
▪ une unité d'identification des tiges ou des pédoncules, agencée pour identifier une tige ou un pédoncule dans chaque image locale.

L'équipement mécanique peut être muni de moyens de propulsion afin d'assurer son déplacement. Il forme alors une machine robotisée autonome. L'équipement mécanique peut également être monté sur un tracteur agricole ou sur un support roulant destiné à être tracté.

Chaque caméra (principale et secondaire) peut comprendre un capteur formé d'un ensemble d'éléments photosensibles (ou pixels) organisés en matrice. Chaque caméra est de préférence agencée pour acquérir des images sur au moins une partie du spectre visible. Elle peut également être agencée pour couvrir, de plus, une partie du spectre ultraviolet et/ou du spectre infrarouge.

Chaque caméra secondaire peut également être une caméra à vision stéréoscopique, c'est-à-dire comprenant deux capteurs agencés pour permettre la construction d'images tridimensionnelles, chaque image tridimensionnelle comprenant un nuage de points définis chacun par une position dans l'espace. Alternativement, chaque caméra secondaire peut être une caméra plénoptique.

L'équipement mécanique peut comprendre, en outre, un ou plusieurs bras robotisés, chaque bras robotisé portant une caméra secondaire et étant agencé pour la positionner successivement au voisinage de zones d'intérêt. L'équipement mécanique comprend par exemple trois ou quatre bras robotisés. Les bras robotisés sont commandés de sorte que, pour chaque zone d'intérêt, une image locale soit acquise par l'une des caméras secondaires.

Selon une forme particulière de réalisation, l'équipement mécanique comprend, en outre, un système de récolte des fruits. Le système de récolte comporte au moins un moyen de coupe agencé pour couper les tiges ou les pédoncules des fruits.

Selon une première variante de réalisation, un moyen de coupe est monté sur chaque bras robotisé. Chaque bras robotisé est alors agencé pour positionner successivement la caméra secondaire qu'il porte au voisinage d'une zone d'intérêt et le moyen de coupe au niveau de la tige ou du pédoncule à couper.

Selon une deuxième variante de réalisation, chaque moyen de coupe est monté sur un bras robotisé de coupe dédié, le bras robotisé de coupe étant agencé pour positionner le moyen de coupe successivement au niveau de chaque tige ou pédoncule identifié, de façon à permettre sa coupe.

Selon une forme particulière de réalisation, le système de sélection des fruits à récolter comporte, en outre :
▪ une unité de détermination d'un degré de maturité des fruits, agencée pour déterminer un degré de maturité pour le fruit de chaque zone d'intérêt détectée, et/ou
▪ une unité de détermination d'un état sanitaire des fruits, agencée pour déterminer un indicateur de l'état sanitaire pour le fruit de chaque zone d'intérêt détectée.

Le système de récolte de fruits peut comporter, en outre, un moyen de préhension monté sur chaque bras robotisé, chaque moyen de préhension étant agencé pour saisir la tige ou le pédoncule du côté du fruit avant, pendant et après la coupe. Le cas échéant, le système de récolte de fruits peut également comporter un moyen de préhension monté sur chaque bras robotisé de coupe. Avantageusement, le moyen de préhension est monté sur le même bras que le moyen de coupe.

Le système de récolte de fruits peut aussi comprendre un ou plusieurs bacs de récupération des fruits coupés.

Selon une première variante de réalisation, le système de récolte de fruits comporte un unique bac de récupération, et chaque bras robotisé et le moyen de préhension qu'il porte sont agencés pour déposer chaque fruit coupé par le moyen de coupe dans le bac de récupération. Le bac de récupération est par exemple solidaire d'un châssis de l'équipement mécanique.

Selon une deuxième variante de réalisation, le système de récolte de fruits comporte plusieurs bacs de récupération, et chaque bras robotisé et le moyen de préhension qu'il porte sont agencés pour déposer chaque fruit coupé par le moyen de coupe dans l'un des bacs de récupération, en fonction de l'indicateur de l'état sanitaire déterminé pour ce fruit. Cette variante de réalisation permet de trier automatiquement les fruits sains des fruits malades ou endommagés. Les bacs de récupération sont par exemple solidaires d'un châssis de l'équipement mécanique.

Selon une troisième variante de réalisation, le système de récolte de fruits comprend un bac de récupération monté sur chaque bras robotisé portant le moyen de coupe, sous ledit moyen de coupe.

Le système de sélection des fruits à récolter peut comporter, en outre, une unité de détermination de la présence d'obstacles, agencée pour déterminer si des obstacles entravent la récolte des fruits. En particulier, l'unité de détermination de la présence d'obstacles peut être agencée pour déterminer s'il existe un espace suffisant, entre les branches de la végétation et, le cas échéant, les fils de palissage, pour permettre le passage d'un bras robotisé et celui du fruit coupé. La présence d'obstacles est par exemple déterminée à partir d'une image globale ou d'une image locale.

Par ailleurs, l'équipement mécanique peut comprendre, en outre, un dispositif de soufflage agencé pour former un flux d'air au voisinage de chaque zone d'intérêt. De préférence, le flux d'air est formé au voisinage de chaque zone d'intérêt lorsqu'une image locale est acquise au voisinage de cette zone d'intérêt et/ou lorsqu'une opération de coupe est réalisée. Le dispositif de soufflage comporte par exemple une soufflerie centrale montée sur un châssis de l'équipement mécanique, une buse de soufflage montée sur chaque bras robotisé et des conduites d'air reliant chacune une buse de soufflage à la soufflerie centrale. Dans une autre forme de réalisation, le dispositif de soufflage peut comporter une machine soufflante montée sur chaque bras robotisé.

Selon une forme particulière de réalisation, l'équipement mécanique est agencé pour permettre la récolte de fruits au cours de son déplacement. En particulier, les bras robotisés peuvent être agencés pour compenser le déplacement global de l'équipement mécanique au cours des opérations d'acquisition des images locales, et de saisie et de coupe des tiges ou des pédoncules des fruits.

### BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :
- la figure 1A représente schématiquement, dans une vue en perspective, un exemple d'équipement mécanique pour la récolte de grappes de raisin dans une vigne ;
- la figure 1B représente schématiquement, dans une vue de côté, l'équipement mécanique de la figure 1A dans une vigne ;
- la figure 2 représente un exemple de procédé de récolte de fruits selon l'invention ;
- la figure 3 illustre le résultat d'une étape de détection de zones d'intérêt dans le procédé de la figure 2 ;
- la figure 4 représente un exemple de mise en oeuvre d'une étape d'identification des tiges dans le procédé de la figure 2.

### EXPOSÉ DÉTAILLÉ DE MODES DE RÉALISATION PARTICULIERS

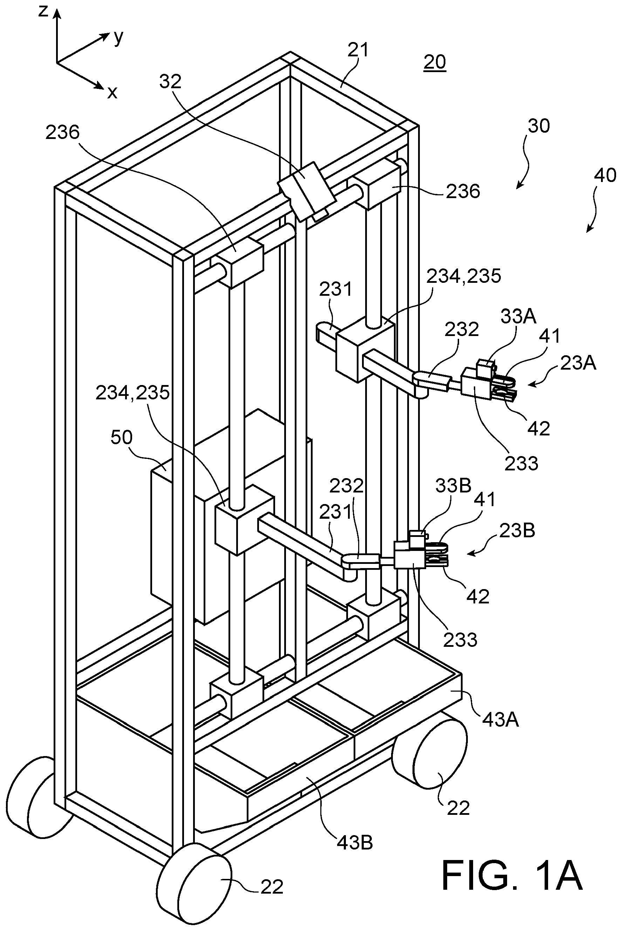

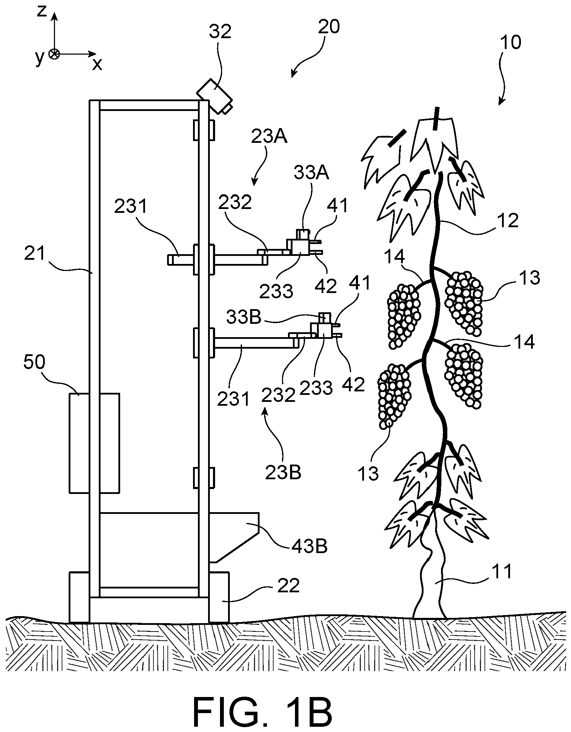

Les figures 1A et 1B représentent schématiquement un exemple d'équipement mécanique pour la récolte de fruits selon l'invention. Sur la figure 1A, l'équipement mécanique est représenté dans une vue en perspective et, sur la figure 1B, il est représenté dans une vue de côté dans une rangée de ceps s'étendant selon un axe y. Dans l'exemple décrit ci-dessous, l'équipement mécanique est utilisé pour la récolte de grappes de raisin dans une vigne. Néanmoins, l'invention s'applique également à la récolte de tout autre fruit. Le cep 10 visible sur la figure 1B comprend un tronc 11 d'où partent des sarments 12 et des grappes 13 reliées chacune à un sarment 12 par un pédoncule 14. L'équipement mécanique 20 est agencé pour identifier le pédoncule 14 de chaque grappe 13 et le couper. Il comporte un châssis 21 monté sur des essieux 22 afin de permettre son déplacement. L'équipement mécanique 20 peut être tracté manuellement, par un tracteur, ou être équipé de moyens de propulsion assurant un déplacement autonome. Il comprend en outre deux bras robotisés 23A, 23B, un système de sélection des fruits à récolter 30, un système de récolte des fruits 40 et une unité de commande 50.

Chaque bras robotisé 23A, 23B est monté sur le châssis 21 et comprend une extrémité distale apte à être déplacée relativement au châssis 21 selon plusieurs degrés de liberté. Dans l'exemple de réalisation des figures 1A et 1B, chaque bras robotisé 23A, 23B comprend un premier segment 231 s'étendant selon l'axe *̅x̅*̅, un deuxième segment 232 en liaison pivot avec le premier segment 231 selon l'axe *̅z̅*̅ et un troisième segment 233 en liaison pivot avec le deuxième segment selon un axe du plan (*̅x̅*̅, *̅y̅*̅). Chaque bras robotisé 23A, 23B comprend en outre un premier système de guidage 234 portant le premier segment 231, de sorte à permettre son déplacement en translation selon l'axe *̅x̅*̅, un deuxième système de guidage 235 portant le premier système de guidage 234, de sorte à permettre son déplacement en translation selon l'axe *̅z̅*̅,̅ et un troisième système de guidage 236 portant le deuxième système de guidage 235, de sorte à permettre son déplacement en translation selon l'axe y. Le troisième segment 233 de chaque bras robotisé 23A, 23B est ainsi apte à être déplacé par rapport au châssis 21 selon cinq degrés de liberté. Chaque bras robotisé 23A, 23B peut donc être qualifié de « bras robotisé 5 axes ». Bien entendu, l'équipement mécanique pour la récolte de fruits selon l'invention pourrait comporter tout autre type de bras robotisé, notamment des bras robotisés présentant un plus grand nombre de degrés de liberté. Le troisième segment 233 de chaque bras robotisé 23A, 23B est agencé pour porter une caméra et des outils, comme expliqué ci-après.

Le système de sélection 30 comprend une caméra principale 32 et une caméra secondaire 33A, 33B pour chaque bras robotisé 23A, 23B. La caméra principale 32 est agencée pour acquérir des images dites globales d'un ou plusieurs ceps 10, ou au moins d'une partie d'un ou plusieurs ceps 10. La caméra principale 32 peut être montée de façon fixe sur le châssis 21. Elle est par exemple orientée de façon à ce que son axe de visée soit orthogonal à l'axe *̅y̅*̅. La caméra principale 32 est une caméra dite RGB, c'est-à-dire comprenant un ensemble d'éléments photosensibles aptes à attribuer une intensité lumineuse dans au moins trois bandes de longueurs d'onde du spectre visible à chaque point d'un espace image. La caméra principale 32 pourrait également couvrir une partie du spectre ultraviolet et/ou du spectre infrarouge. Chaque bras robotisé 23A, 23B porte sur son segment 233 une caméra secondaire 33A, 33B, respectivement. Il est agencé pour pouvoir positionner la caméra secondaire respective 33A, 33B à des emplacements successifs souhaités au niveau de la vigne, comme expliqué ci-après. Chaque caméra secondaire 33A, 33B est agencée pour acquérir des images dites locales, couvrant normalement une seule grappe ou partie de grappe. Les caméras secondaires 33A, 33B sont par exemple des caméras stéréoscopiques, c'est-à-dire équipées chacune de deux capteurs photosensibles agencés pour acquérir deux images d'une même scène selon des angles distincts et générer ainsi des images tridimensionnelles (3D). Chaque capteur photosensible peut être agencé pour acquérir des intensités de rayonnement dans plusieurs bandes de langueurs d'onde dans le spectre visible, ultraviolet et/ou infrarouge. Ainsi, une caméra stéréoscopique permet de collecter à la fois des informations spectrales et des informations de position dans la scène observée. En pratique, chaque image locale 3D peut consister en un nuage de points associés chacun à des intensités de rayonnement dans plusieurs bandes de longueurs d'onde.

Le système de récolte 40 comprend, pour chaque bras robotisé 23A, 23B, un moyen de coupe 41 et un moyen de préhension 42 montés sur le segment 233 du bras robotisé considéré. Il comprend en outre deux bacs de récupération 43A, 43B. Le moyen de coupe 41 est agencé pour couper les pédoncules 14 et le moyen de préhension 42 est agencé pour saisir chaque pédoncule au cours de la coupe. Les bacs de récupération 43A, 43B sont montés sur le châssis 21 et sont chacun agencés pour recevoir les grappes coupées.

L'unité de commande 50 est agencée pour recevoir les images globales générées par la caméra principale 32 et les images locales générées par chacune des caméras secondaires 33A, 33B. Elle est en outre agencée pour traiter ces images, comme expliqué ci-après, et commander les bras robotisés 23A, 23B, le moyen de coupe 41 et le moyen de préhension 42.

L'équipement mécanique selon l'invention peut comporter, en outre, un système de géolocalisation et une unité de cartographie, non représentés. Le système de géolocalisation est agencé pour déterminer les coordonnées géographiques de l'équipement mécanique ou de l'un de ses composants. En particulier, l'équipement mécanique peut comporter un système de géolocalisation monté sur chaque bras robotisé 23A, 23B, de façon à déterminer les coordonnées géographiques de chaque caméra secondaire 33A, 33B et donc de chaque objet imagé par ces caméras. Chaque système de géolocalisation peut comprendre un système de positionnement par satellites et/ou une centrale inertielle. L'unité de cartographie est agencée pour générer une cartographie définissant les positions des fruits détectés dans les images globales. Le cas échéant, la cartographie peut prendre en considération différents critères, par exemple un degré de maturité et/ou un état sanitaire des fruits, et/ou le fait que la tige d'un fruit n'a pas pu être identifiée, comme expliqué ci-après.

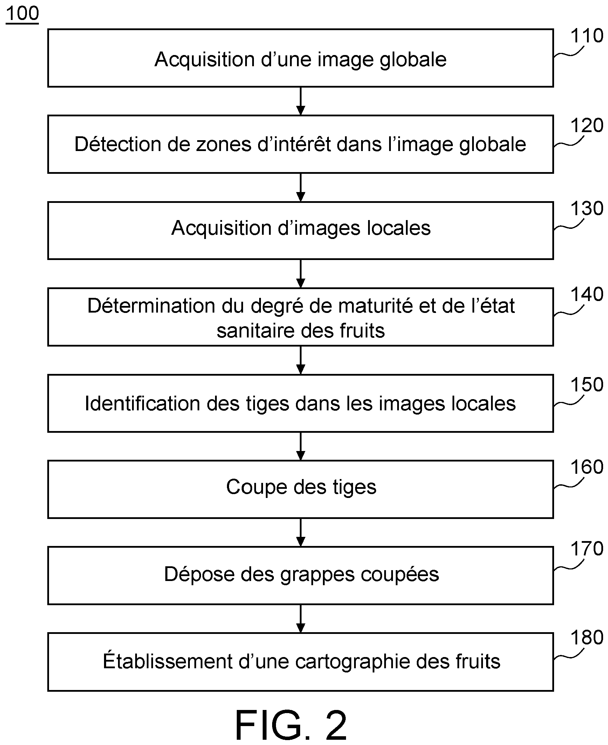

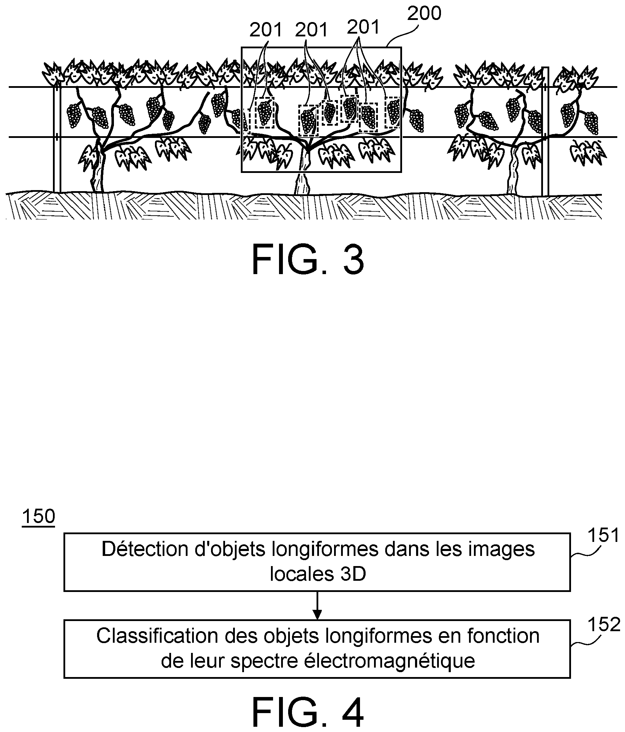

La figure 2 représente un exemple de procédé de récolte de fruits selon l'invention et la figure 3 illustre le résultat d'une étape de ce procédé, dans laquelle des zones d'intérêt sont détectées. Le procédé est décrit en référence à l'équipement mécanique décrit en référence à la figure 1. Le procédé 100 comprend une étape 110 d'acquisition d'une image globale, une étape 120 de détection de zones d'intérêt, une étape 130 d'acquisition des images locales, une étape 140 de détermination d'un indicateur d'un degré de maturité et d'un indicateur d'un état sanitaire des fruits, une étape 150 d'identification des tiges, une étape 160 de coupe des tiges, une étape 170 de dépose des grappes coupées et une étape 180 d'établissement d'une cartographie des fruits. Au cours de l'étape 110 d'acquisition d'une image globale, la caméra principale 32 acquière une image globale, référencée 200 sur la figure 3, et la transmet à l'unité de commande 50. Au cours de l'étape 120, l'unité de commande 50 effectue un traitement d'image consistant à détecter les zones d'intérêt dans l'image globale 200, chaque zone d'intérêt comportant une grappe de raisin. Les zones d'intérêt portent la référence 201 sur la figure 3. L'étape 120 de détection de zones d'intérêt peut comprendre une méthode de classification basée sur la forme et la couleur des grappes à récolter. Comme illustré sur la figure 3, des grappes peuvent n'être représentées que partiellement dans une image globale et des zones d'intérêt 201 peuvent alors ne comprendre que la partie visible des grappes 13. Les étapes 130, 140, 150, 160, 170 sont ensuite réalisées pour chacune des zones d'intérêt détectées dans l'image globale. Au cours de l'étape 130, l'une des caméras secondaires 33A, 33B est positionnée au voisinage de la zone d'intérêt 201 considérée par l'actionnement du bras robotisé 23A, 23B correspondant, et une image locale 3D est acquise pour cette zone d'intérêt et transmise à l'unité de commande 50. Au cours de l'étape 140, l'unité de commande 50 détermine un indicateur d'un degré de maturité et un indicateur d'un état sanitaire des grappes pour chaque zone d'intérêt détectée. Ces indicateurs sont déterminés en fonction des intensités de rayonnement dans une ou plusieurs plages de longueurs d'onde prédéterminées des images locales 3D correspondantes. Lorsque le degré de maturité est considéré comme satisfaisant pour la zone d'intérêt considérée, le procédé se poursuit pour cette zone d'intérêt avec l'étape 150. En revanche, lorsque cet indicateur n'est pas satisfaisant pour la zone d'intérêt considérée, ladite zone d'intérêt est exclue pour la suite du procédé. L'étape 150 consiste à identifier le pédoncule de chaque grappe à l'aide de l'image locale 3D correspondante. Au cours de l'étape 160, le bras robotisé 23A, 23B utilisé pour positionner la caméra secondaire ayant acquis ladite image locale 3D positionne le moyen de coupe 41 et le moyen de préhension 42 au niveau de chaque pédoncule identifié ; le moyen de préhension 42 est actionné pour saisir le pédoncule ; puis le moyen de coupe 41 est actionné pour couper le pédoncule en amont du moyen de préhension 42. L'étape 170 de dépose des grappes coupées consiste à déposer la grappe coupée dans l'un des bacs de récupération 43A, 43B, en fonction de son indicateur d'état sanitaire. Cette étape 170 est réalisée en actionnant le bras robotisé 23A, 23B correspondant, le moyen de préhension 42 poursuivant la saisie du pédoncule jusqu'à ce que la grappe coupée atteigne le bac de récupération 43A, 43B sélectionné. L'étape 180 d'établissement d'une cartographie des fruits consiste à déterminer des coordonnées géographiques de l'ensemble des fruits détectés dans l'image globale ou d'une partie d'entre eux répondant à des critères prédéterminés. À titre d'exemple, une cartographie peut être établie pour les fruits présentant un degré de maturité insuffisant ou les fruits pour lesquels la tige n'a pas pu être identifiée au cours de l'étape 150. Le procédé 100 peut alors se poursuivre en boucle avec l'acquisition d'une nouvelle image globale représentant une autre partie de la vigne.

Il est à noter que les étapes 110 à 170 du procédé de récolte de fruits selon l'invention peuvent être réalisées alors que l'équipement mécanique 20 est à l'arrêt ou en déplacement, par exemple en déplacement à une vitesse relativement constante. Dans le cas d'une exécution du procédé en cours de déplacement de l'équipement mécanique, les bras robotisés peuvent alors être agencés pour compenser le déplacement de l'équipement mécanique, notamment pour l'étape 130 d'acquisition des images locales et l'étape 160 de coupe des tiges.

La figure 4 représente un exemple de mise en oeuvre de l'étape 150 d'identification des tiges. Dans cet exemple, l'étape 150 comprend une sous-étape 151 de détection d'objets longiformes et une sous-étape 152 de classification des objets longiformes. La sous-étape 151 consiste à détecter dans chaque image locale 3D les éléments présentant une forme allongée. Un élément est par exemple défini comme présentant une forme allongée lorsque le rapport de sa plus grande dimension sur chacune des deux autres dimensions orthogonales est supérieur ou égal à un seuil prédéterminé. Ce seuil est par exemple fixé à trois. La sous-étape 152 consiste à déterminer si chaque objet longiforme est un pédoncule ou un objet d'un autre type. Elle est par exemple réalisée en vérifiant que l'objet longiforme n'a pas de ramification. Elle peut également être réalisée en déterminant si le spectre de chaque objet longiforme est au moins en partie situé dans une bande de longueurs d'onde prédéterminée. En particulier, pour une grappe de raisin, un objet longiforme de couleur verte peut être classifié dans la classe des pédoncules, un objet longiforme de couleur marron peut être classifié dans la classe des sarments, et un objet longiforme de couleur grise peut être classifié dans la classe des fils de palissage. La sous-étape 152 de classification des objets longiformes peut aussi être réalisée en déterminant une longueur, une courbure et/ou une orientation de chaque objet longiforme.

Il est à noter que l'unité de commande 50 réalise un premier traitement d'image consistant à détecter les zones d'intérêt dans l'image globale et un deuxième traitement d'image consistant à identifier les tiges (ou pédoncules) dans les images locales. L'unité de commande 50 détermine aussi l'indicateur de degré de maturité et l'indicateur d'état sanitaire des fruits, et la présence d'obstacles. L'unité de commande 50 peut ainsi être considérée comme comprenant une unité de détection de zones d'intérêt, une unité d'identification des tiges, une unité de détermination d'un degré de maturité des fruits, une unité de détermination d'un état sanitaire des fruits et une unité de détermination de la présence d'obstacles. L'unité de commande 50 réalise en outre la commande des bras robotisés 23A, 23B, du moyen de coupe 41 et du moyen de préhension 42. Le cas échéant, l'unité de commande 50 compense aussi le déplacement de l'équipement mécanique au cours de l'identification et de la coupe des tiges. En pratique, elle peut ainsi être formée par plusieurs éléments matériels et/ou logiciels distincts.

## Revendications

1. Procédé de récolte de fruits portés par une tige ou un pédoncule, le procédé (100) comprenant :
▪ une étape (120) de détection de zones d'intérêt dans une image globale représentant un ensemble végétal, dans laquelle une ou plusieurs zones d'intérêt (201) sont détectées dans l'image globale (200) à l'aide d'un processus de traitement d'image, chaque zone d'intérêt (201) comportant au moins une partie
▪ d'un fruit (13),
▪ une étape (130) d'acquisition d'images locales, dans laquelle une image locale est acquise au voisinage de chaque zone d'intérêt (201), chaque image locale représentant au moins une partie du fruit de la zone d'intérêt considérée, et
▪ une étape (150) d'identification des tiges ou des pédoncules, dans laquelle une tige ou un pédoncule (14) est identifié dans chaque image locale,
l'étape (150) d'identification des tiges ou des pédoncules comprenant :
▪ une sous-étape (151) de détection d'objets longiformes, dans laquelle les éléments présentant une forme allongée sont détectés dans chaque image locale, et
▪ une sous-étape de discrimination, dans laquelle il est déterminé si chaque objet longiforme est une tige ou un pédoncule (14), ou bien un objet longiforme d'un autre type.

2. Procédé selon la revendication 1, dans lequel la sous-étape de discrimination comprend :
▪ une classification de chaque objet longiforme en fonction des intensités de rayonnement de ses pixels ou de ses points,
▪ une détermination d'une longueur de chaque objet longiforme,
▪ une détermination d'une position relative de chaque objet longiforme par rapport à un corps du fruit,
▪ une détermination d'une courbure de chaque objet longiforme, et/ou
▪ une détermination d'un ou plusieurs angles formés entre un axe longitudinal de l'objet longiforme et un axe prédéterminé d'un fil de palissage.

3. Procédé selon l'une des revendications précédentes, dans lequel l'étape (130) d'acquisition d'images locales comprend une sous-étape de positionnement d'une caméra à proximité de chaque zone d'intérêt détectée dans l'image globale, la caméra 10 (33A, 33B) étant agencée pour acquérir les images locales.

4. Procédé selon l'une des revendications précédentes comprenant, en outre :
▪ une étape (140) de détermination d'un degré de maturité des fruits, dans laquelle un indicateur du degré de maturité est déterminé pour le fruit de chaque zone d'intérêt (201) détectée, et/ou
▪ une étape (140) de détermination d'un état sanitaire des fruits, dans laquelle un indicateur de l'état sanitaire est déterminé pour le fruit de chaque zone d'intérêt (201) détectée, le procédé comprenant, de plus, une étape de sélection des fruits à récolter, dans laquelle les fruits à récolter sont sélectionnés en fonction de l'indicateur du degré de maturité et/ou de l'indicateur de l'état sanitaire.

5. Procédé selon l'une des revendications précédentes comprenant, en outre :
▪ une étape (160) de récolte des fruits, dans laquelle la tige ou le pédoncule (14) identifié dans chaque image locale est coupé, et
▪ une étape (170) d'établissement d'une cartographie des fruits restant à récolter, dans laquelle des coordonnées géographiques sont déterminées pour chaque zone d'intérêt détectée pour laquelle le fruit n'a pas été récolté.

6. Équipement mécanique pour la récolte de fruits comprenant un système de sélection des fruits à récolter, le système de sélection (30) comportant :
▪ une caméra principale (32), agencée pour acquérir des images globales (200) représentant chacune un ensemble végétal,
▪ une unité de détection de zones d'intérêt, agencée pour détecter une ou plusieurs zones d'intérêt (201) dans chaque image globale (200), chaque zone d'intérêt comportant au moins une partie d'un fruit (13),
▪ une ou plusieurs caméras secondaires (33A, 33B), agencées pour acquérir une image locale au voisinage de chaque zone d'intérêt (201), chaque image locale représentant au moins une partie du fruit de la zone d'intérêt considérée, et
▪ une unité d'identification des tiges ou des pédoncules, agencée pour détecter des objets longiformes, les éléments présentant une forme allongée étant détectés dans chaque image locale, et pour déterminer si chaque objet longiforme est une tige ou un pédoncule (14), ou bien un objet longiforme d'un autre type, de façon à identifier une tige ou un pédoncule (14) dans chaque image locale.

7. Équipement mécanique selon la revendication 6 comprenant, en outre, un ou plusieurs bras robotisés (23A, 23B), chaque bras robotisé portant une caméra secondaire (33A, 33B) et étant agencé pour la positionner successivement au voisinage de zones d'intérêt (201).

8. Équipement mécanique selon l'une des revendications 6 et 7 comprenant, en outre, un système de récolte des fruits, le système de récolte (40) comportant au moins un moyen de coupe (41) agencé pour couper les tiges ou les pédoncules des fruits.

9. Équipement mécanique selon les revendications 7 et 8, dans lequel un moyen de coupe est monté sur chaque bras robotisé (23A, 23B), chaque bras robotisé étant agencé pour positionner successivement la caméra secondaire qu'il porte au voisinage d'une zone d'intérêt et le moyen de coupe au niveau de la tige ou du pédoncule à couper.

10. Équipement mécanique selon l'une des revendications 6 à 9, dans lequel le système de sélection des fruits à récolter comporte, en outre, une unité de détermination d'un état sanitaire des fruits, agencée pour déterminer un indicateur de l'état sanitaire pour le fruit de chaque zone d'intérêt détectée.

11. Équipement mécanique selon l'une des revendications 6 à 10, dans lequel le système de récolte de fruits comporte, en outre, un moyen de préhension monté sur chaque bras robotisé, chaque moyen de préhension étant agencé pour saisir la tige ou le pédoncule du côté du fruit avant, pendant et après la coupe.

12. Équipement mécanique selon les revendications 10 et 11, dans lequel le système de récolte de fruits comporte, en outre, plusieurs bacs de récupération, et chaque bras robotisé et le moyen de préhension qu'il porte sont agencés pour déposer chaque fruit coupé par le moyen de coupe dans l'un des bacs de récupération, en fonction de l'indicateur de l'état sanitaire déterminé pour ce fruit.

13. Équipement mécanique selon l'une des revendications 11 et 12, dans lequel le système de sélection des fruits à récolter comporte, en outre, une unité de détermination de la présence d'obstacles, agencée pour déterminer si des obstacles entravent la récolte des fruits.

14. Équipement mécanique selon l'une des revendications 6 à 13 comprenant, en outre, un dispositif de soufflage agencé pour former un flux d'air au voisinage de chaque zone d'intérêt.

## Patentansprüche

1. Verfahren zur Ernte von Früchten, die von einem Stängel oder einem Stiel getragen werden, wobei das Verfahren (100) umfasst:
▪ einen Detektionsschritt (120) interessierender Zonen in einem globalen Bild, das eine Pflanzenanordnung darstellt, wobei eine oder mehrere interessierende Zonen (201) in dem globalen Bild (200) mit Hilfe eines Bildverarbeitungsverfahrens ermittelt werden, wobei jede interessierende Zone (201) mindestens einen Teil einer Frucht (13) aufweist,
▪ einen Erfassungsschritt (130) lokaler Bilder, wobei ein lokales Bild in der Nähe jeder interessierenden Zone (201) erfasst wird, wobei jedes lokale Bild mindestens einen Teil der Frucht der entsprechenden interessierenden Zone darstellt, und
▪ einen Identifikationsschritt (150) der Stängel oder der Stiele, wobei ein Stängel oder ein Stiel (14) in jedem lokalen Bild identifiziert wird,
wobei der Identifikationsschritt (150) der Stängel oder der Stiele umfasst:
▪ einen Detektionsunterschritt (151) länglicher Objekte, wobei die Elemente, die eine längliche Form aufweisen, in jedem lokalen Bild ermittelt werden, und
▪ einen Unterscheidungsunterschritt, bei dem bestimmt wird, ob jedes längliche Objekt ein Stängel oder ein Stiel (14) oder ein längliches Objekt eines anderen Typs ist.

2. Verfahren nach Anspruch 1, wobei der Unterscheidungsunterschritt umfasst:
▪ eine Klassifizierung jedes länglichen Objekts in Abhängigkeit von den Strahlungsintensitäten seiner Pixel oder seiner Punkte,
▪ eine Bestimmung einer Länge jedes länglichen Objekts,
▪ eine Bestimmung einer relativen Position jedes länglichen Objekts im Verhältnis zu einem Körper der Frucht,
▪ eine Bestimmung einer Krümmung jedes länglichen Objekts, und/oder
▪ eine Bestimmung eines oder mehrerer Winkel, die zwischen einer Längsachse des länglichen Objekts und einer vorher festgelegten Achse eines Palisadendrahts gebildet sind.

3. Verfahren nach einem der vorangehenden Ansprüche, wobei der Erfassungsschritt (130) lokaler Bilder einen Positionierungsunterschritt einer Kamera in der Nähe jeder interessierenden Zone umfasst, die im globalen Bild ermittelt wurde, wobei die Kamera (33A, 33B) eingerichtet ist, um die lokalen Bilder zu erfassen.

4. Verfahren nach einem der vorangehenden Ansprüche, das ferner umfasst:
▪ einen Bestimmungsschritt (140) eines Reifegrades der Früchte, wobei ein Indikator des Reifegrades für die Frucht jeder ermittelten interessierende Zone (201) bestimmt wird, und/oder
▪ einen Bestimmungsschritt (140) eines Gesundheitszustands der Früchte, wobei ein Indikator des Gesundheitszustands für die Frucht jeder ermittelten interessierenden Zone (201) bestimmt wird, wobei das Verfahren weiterhin einen Auswahlschritt der zu erntenden Früchte umfasst, wobei die zu erntenden Früchte in Abhängigkeit vom Indikator des Reifegrades und/oder vom Indikator des Gesundheitszustands ausgewählt werden.

5. Verfahren nach einem der vorangehenden Ansprüche, das ferner umfasst:
▪ einen Ernteschritt (160) der Früchte, wobei der Stängel oder der Stiel (14), der in jedem lokalen Bild identifiziert wird, abgeschnitten wird, und
▪ einen Erstellungsschritt (170) einer Kartographie der noch zu erntenden Früchte, wobei für jede ermittelte interessierende Zone, für die die Frucht nicht geerntet wurde, geographische Koordinaten bestimmt werden.

6. Mechanische Ausrüstung für die Ernte von Früchten, umfassend ein Auswahlsystem der zu erntenden Früchte, wobei das Auswahlsystem (30) aufweist:
▪ eine Hauptkamera (32), die eingerichtet ist, um globale Bilder (200) zu erfassen, die jeweils eine Pflanzenanordnung darstellen,
▪ eine Detektionseinheit interessierender Zonen, die eingerichtet ist, um eine oder mehrere interessierende Zonen (201) in jedem globalen Bild (200) zu ermitteln, wobei jede interessierende Zone mindestens einen Teil einer Frucht (13) aufweist,
▪ eine oder mehrere sekundäre Kameras (33A, 33B), die ausgelegt sind, um ein lokales Bild in der Nähe jeder interessierenden Zone (201) zu erfassen, wobei jedes lokale Bild mindestens einen Teil der Frucht der entsprechenden interessierenden Zone darstellt, und
▪ eine Identifikationseinheit der Stängel oder der Stiele, die eingerichtet ist, um längliche Objekt zu ermitteln, wobei die Elemente, die eine längliche Form aufweisen, in jedem lokalen Bild ermittelt werden, und um zu bestimmen, ob jedes längliche Objekt ein Stängel oder ein Stiel (14) oder ein längliches Objekt eines anderen Typs ist, um einen Stängel oder einen Stiel (14) in jedem lokalen Bild zu identifizieren.

7. Mechanische Ausrüstung nach Anspruch 6, die ferner einen oder mehrere Roboterarme (23A, 23B) umfasst, wobei jeder Roboterarm eine sekundäre Kamera (33A, 33B) trägt und eingerichtet ist, um sie nacheinander in der Nähe interessierender Zonen (201) zu positionieren.

8. Mechanische Ausrüstung nach einem der Ansprüche 6 und 7, die ferner ein Erntesystem der Früchte umfasst, wobei das Erntesystem (40) mindestens ein Schneidmittel (41) aufweist, das eingerichtet ist, um die Stängel oder die Stiele der Früchte abzuschneiden.

9. Mechanische Ausrüstung nach den Ansprüchen 7 und 8, wobei ein Schneidmittel an jedem Roboterarm (23A, 23B) angebracht ist, wobei jeder Roboterarm eingerichtet ist, um aufeinanderfolgend die sekundäre Kamera, die er trägt, in der Nähe einer interessierenden Zone und das Schneidmittel im Bereich des abzuschneidenden Stängels oder Stiels zu positionieren.

10. Mechanische Ausrüstung nach einem der Ansprüche 6 bis 9, wobei das Auswahlsystem der zu erntenden Früchte ferner eine Einheit zur Bestimmung eines Gesundheitszustands der Früchte aufweist, die eingerichtet ist, um einen Indikator des Gesundheitszustands für die Frucht jeder ermittelten interessierenden Zone zu bestimmen.

11. Mechanische Ausrüstung nach einem der Ansprüche 6 bis 10, wobei das Erntesystem von Früchten ferner ein Greifmittel aufweist, das an jedem Roboterarm angebracht ist, wobei jedes Greifmittel eingerichtet ist, um den Stängel oder den Stiel an der Seite der Frucht vor, während und nach dem Schneiden zu ergreifen.

12. Mechanische Ausrüstung nach den Ansprüchen 10 und 11, wobei das Erntesystem von Früchten ferner mehrere Rückgewinnungsbehälter aufweist und jeder Roboterarm und das Greifmittel, das er trägt, eingerichtet sind, um jede vom Schneidmittel abgeschnittene Frucht in Abhängigkeit vom Indikator des für diese Frucht bestimmten Gesundheitszustands in einen der Rückgewinnungsbehälter zu legen.

13. Mechanische Ausrüstung nach einem der Ansprüche 11 und 12, wobei das Auswahlsystem der zu erntenden Früchte ferner eine Einheit zur Bestimmung des Vorhandenseins von Hindernissen aufweist, die eingerichtet ist, um zu bestimmen, ob Hindernisse die Ernte der Früchte behindern.

14. Mechanische Ausrüstung nach einem der Ansprüche 6 bis 13, die ferner eine Gebläsevorrichtung umfasst, die eingerichtet ist, um einen Luftstrom in der Nähe jeder interessierenden Zone zu bilden.

## Claims

1. A method for harvesting fruit borne by a stem or a peduncle, the method (100) comprising:
▪ a step (120) of detecting areas of interest in an overall image representing a plant grouping, wherein one or several area(s) of interest (201) are detected in the overall image (200) using an image processing process, each area of interest (201) including at least one portion of a fruit (13),
▪ a step (130) of acquiring local images, wherein a local image is acquired in the vicinity of each area of interest (201), each local image representing at least one portion of the fruit of the considered area of interest, and
▪ a step (150) of identifying the stems or the peduncles, wherein a stem or a peduncle (14) is identified in each local image.
▪ a sub-step (151) of detecting elongate objects, wherein the elements having an elongated shape are detected in each local image, and
▪ a discrimination sub-step, wherein it is determined whether each elongate object is a stem or a peduncle (14), or an elongate object of another type.

2. The method according to claim 1, wherein the discrimination sub-step comprises:
▪ a classification of each elongate object according to the radiation intensities of its pixels or its points,
▪ a determination of a length of each elongate object,
▪ a determination of a relative position of each elongate object with respect to a body of the fruit,
▪ a determination of a curvature of each elongate object, and/or
▪ a determination of one or several angle(s) formed between a longitudinal axis of the elongate object and a predetermined axis of a trellising wire.

3. The method according to one of the preceding claims, wherein the step (130) of acquiring local images comprises a sub-step of positioning a camera proximate to each area of interest detected in the overall image, the camera (33A, 33B) being arranged to acquire the local images.

4. The method according to one of the preceding claims, further comprising:
▪ a step (140) of determining a ripening degree of the fruit, wherein an indicator of the ripening degree is determined for the fruit of each detected area of interest (201), and/or
▪ a step (140) of determining a state of health of the fruit, wherein an indicator of the state of health is determined for the fruit of each detected area of interest (201),
the method comprising, in addition, a step of selecting the fruit to be harvested, wherein the fruit to be harvested are selected according to the indicator of the ripening degree and/or the indicator of the state of health.

5. The method according to one of the preceding claims, further comprising:
▪ a step (160) of harvesting the fruit, wherein the stem or the peduncle (14) identified in each local image is cut, and
▪ a step (170) of establishing a mapping of the fruit that are still to be harvested, wherein geographic coordinates are determined for each detected area of interest for which the fruit has not been harvested.

6. Mechanical equipment for harvesting fruit comprising a system for selecting the fruit to be harvested, the selection system (30) including:
▪ a main camera (32), arranged to acquire overall images (200) each representing a plant grouping,
▪ a unit for detecting areas of interest, arranged to detect one or several area(s) of interest (201) in each overall image (200), each area of interest including at least one portion of a fruit (13),
▪ one or several secondary camera(s) (33A, 33B), arranged to acquire a local image in the vicinity of each area of interest (201), each local image representing at least one portion of the fruit of the considered area of interest, and
▪ a unit for identifying the stems or the peduncles, arranged to detect elongated objects, with elongated elements being detected in each local image, and to determine whether each elongated object is a stem of peduncle (14), or an elongated object of another type, so as to identify a stem or a peduncle (14) in each local image.

7. The mechanical equipment according to claim 6, further comprising one or several robotic arm(s) (23A, 23B), each robotic arm carrying a secondary camera (33A, 33B) and being arranged to successively position it in the vicinity of areas of interest (201).

8. The mechanical equipment according to one of claims 6 and 7, further comprising a system for harvesting fruit, the harvesting system (40) including at least one cutting means (41) arranged to cut the stems or the peduncles of the fruit.

9. The mechanical equipment according to claims 7 and 8, wherein a cutting means is mounted on each robotic arm (23A, 23B), each robotic arm being arranged to successively position the secondary camera carried thereby in the vicinity of an area of interest and the cutting means at the stem or the peduncle to be cut.

10. The mechanical equipment according to one of claims 6 to 9, wherein the system for selecting the fruit to be harvested further includes a unit for determining a state of health of the fruit, arranged to determine an indicator of the state of health for the fruit of each detected area of interest.

11. The mechanical equipment according to one of claims 6 to 10, wherein the system for harvesting fruit further includes a gripping means mounted on each robotic arm, each gripping means being arranged to grasp the stem or the peduncle on the fruit side before, during and after cutting.

12. The mechanical equipment according to claims 10 and 11, wherein the system for harvesting fruit further includes several collecting bins, and each robotic arm and the gripping means carried thereby are arranged to deposit each fruit cut by the cutting means in one of the collecting bins, according to the indicator of the state of health determined for this fruit.

13. The mechanical equipment according to one of claims 11 and 12, wherein the system for selecting the fruit to be harvested further includes a unit for determining the presence of obstacles, arranged to determine whether obstacles hinder harvesting of the fruit.

14. The mechanical equipment according to one of claims 6 to 13, further comprising a blowing device arranged to form an air stream in the vicinity of each area of interest.
